# EUROPEAN PATENT APPLICATION

(11) **EP 1 220 511 A2**
(43) Date of publication of application: **03.07.2002**
(21) Application number: 01130449.0
(22) Date of filing: 20.12.2001
(51) Int. Cl.: H04L 29/06

(54) **Memory management for packet storage**

(30) Priority: 22.12.2000 JP 2000390564
(71) Applicant: NEC CORPORATION, Tokyo (JP)
(72) Inventor: Koudu, Masakazu, NEC Corporation, Tokyo (JP)
(74) Representative: Glawe. Delfs. Moll

(57) **Abstract**

A memory management method is disclosed for efficiently storing a plurality of data items of any size without increasing unnecessary empty memory areas. A message data area of a predetermined size for storing a message is reserved in memory, and an actual value area, which is an area for storing values of the parameters, is provided in the message data area. The values of the parameters are sequentially stored in the actual value area without creating unused areas, and a parameter list is created in which positional information is registered that indicates the position at which the values of the parameters are stored. The message data area is then accessed while referring to the parameter list and each of the values of parameters that are necessary for a prescribed process are read.

## Description

### Background of the Invention

### 1. Field of the Invention:

The present invention relates to a memory management method for optimal storage of data of any size in memory and to an information processor for realizing this method.

### 2. Description of the Related Art:

When conducting a conversation or television conference by way of a network, messages are transmitted and received between each node in accordance with a protocol such as HTTP (Hyper Text Transfer Protocol) or SIP (Session Initiation Protocol).

Since messages that are transmitted or received by a protocol such as HTTP or SIP normally include a plurality of parameters depending on the service that is offered to the user, the information processors that are the nodes analyze received message in parameter units. After conversion of each message to internal data that are handled in internal processing (sometimes referred to as a "process" hereinbelow), memory areas of a predetermined size are reserved to hold the message.

When a received message is referred to in a plurality of processes, the information processor is provided with a shared memory. Storing the above-described message in the shared memory prevents the loss of data by overwriting or an increase in the access time when executing any process.

With the information processor of the prior art, the size of the memory area for storing the above-described message cannot be altered unless the program code is modified or a process is regenerated or restarted. As a result, the size of a parameter was assumed to be less than a predetermined fixed value (maximum size) and an area for storing the values of each parameter was reserved in a shared memory.

However, the size of each parameter of a message that has been received by a protocol such as the above-described HTTP or SIP is arbitrary (not set), and information indicating the size of each parameter is not included.

Consequently, there is the problem that when a parameter that exceeds the assumed maximum size is included in a message, the values of this parameter cannot be stored in memory.

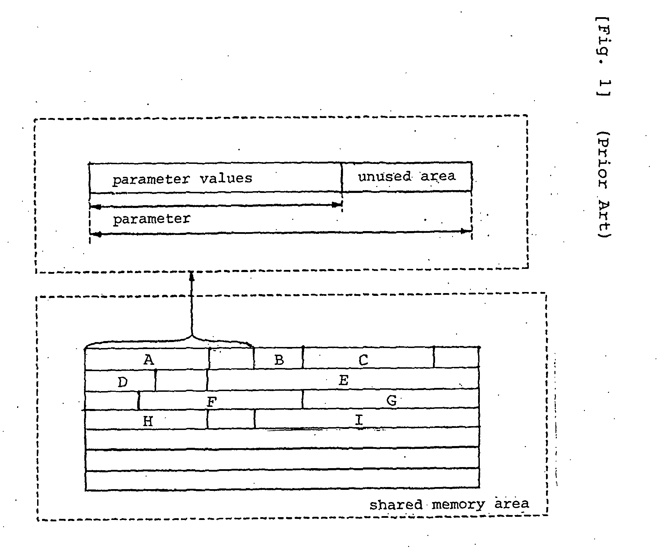

On the other hand, the inclusion of parameters that are smaller than the predetermined fixed value results in the occurrence of unneeded empty memory areas (unused areas) as shown in Fig. 1. In particular, storing in memory a message received by a protocol such as SIP when the number of parameters is expected to be large results in an extremely large number of unused areas.

### Summary of the Invention

It is therefore an object of the present invention to provide a memory management method and information processor that enable the efficient storage of a plurality of data items of any size in memory without increasing the amount of unnecessary empty memory areas.

A message data area of a prescribed size is first reserved in memory for storing messages, and an actual value area is provided in the message data area for storing values of parameters. The values of parameters are then sequentially stored in the actual value area without creating unused areas, and a parameter list is generated in which positional information is registered that indicates the locations in which the values of parameters are stored. The message data area is then accessed by referring to the parameter list to read the values of each of the parameters that are required for each predetermined process.

Accordingly, a message (data) consisting of a plurality of parameters of any size can be reliably stored in memory. In particular, each of the parameters is stored sequentially in the actual value area section of the message data area without creating unused areas, whereby messages can be efficiently stored in memory without increasing unnecessary empty areas.

According to an embodiment of the present invention, the message data area includes flag area for storing flags indicating the existence of parameter values, values of flags that correspond to a parameter is stored in the flag area, and positional information that indicates the location in which flags are stored is registered in the parameter list. In this case, the existence of values of each parameter is indicated by a flag that corresponds to the flag area, whereby a simple check of flags eliminates the need to access parameters for which values do not exist. Unnecessary access of the memory is thus reduced and drops in the processing speed of the processor can be prevented.

According to another embodiment of the present invention, a new message data area is provided in memory when there are no empty areas for storing parameters in the message data area, and parameters are sequentially stored in the new message data areas.

The above and other objects, features, and advantages of the present invention will become apparent from the following description based on the accompanying drawings, which illustrate examples of preferred embodiments of the present invention.

### Brief Description of the Drawings

Fig. 1 is a schematic diagram showing the storage of data in memory by a memory management method of the prior art.
Fig. 2 is a block diagram of an information processor according to an embodiment of the present invention.
Fig. 3 is a block diagram showing an example of an information communication system that comprises a plurality of the information processors shown in Fig. 2.
Fig. 4 shows the constitution of the communication process executed by the information processor shown in Fig. 2.
Fig. 5 is a flow chart showing the procedure of the first embodiment of the memory management method of the present invention.
Fig. 6 is a schematic diagram showing the state of the storage of data in memory by the procedures shown in Fig. 5.
Fig. 7 is a flow chart showing the procedures of the second embodiment of a memory management method of the present invention.
Fig. 8 is a schematic diagram showing the storage of data in memory by the procedures shown in Fig. 7.

### Detailed Description of the Preferred Embodiments

### First Embodiment

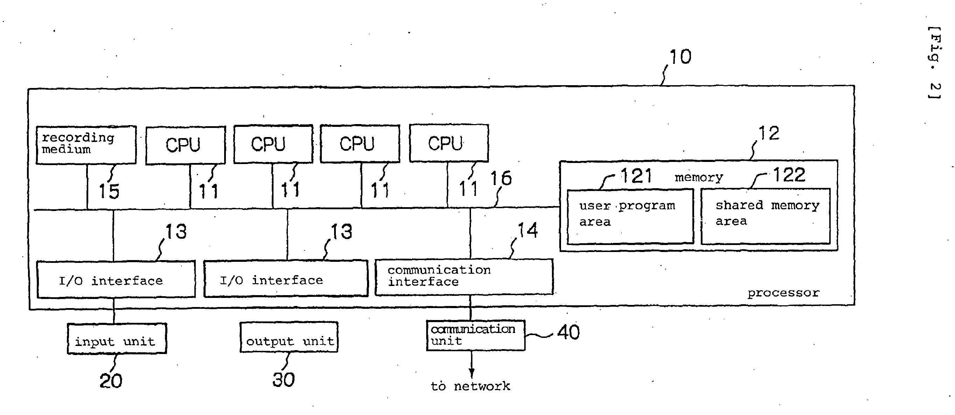

Referring now to Fig. 2, there is shown an information processor according to an embodiment of the present invention, comprising processor 10 for performing predetermined processes in accordance with a program, input unit 20 for receiving commands to processor 10 and information, output unit 30 for monitoring the processing results of processor 10, and communication unit 40 for performing communication with other information processors by way of a network.

Processor 10 comprises four CPUs 11, memory 12 for storing information necessary for the processing of CPUs 11, I/O interfaces 13, which are the interfaces between input unit 20 and output unit 30, communication interface 14, which is the interface with communication unit 40, and recording medium 15 on which a control program is recorded for causing CPUs 11 to execute the memory management process, these components being connected together by way of bus 16.

Processor 10 executes a memory management process that is explained hereinbelow in accordance with the control program stored on recording medium 15. Recording medium 15 may be a magnetic disk, semiconductor memory, an optical disk, or some other recording medium.

Memory 12 includes user program area 121 in which programs are stored for each user that are executed by CPUs 11, and shared memory area 122 that is used as a shared memory.

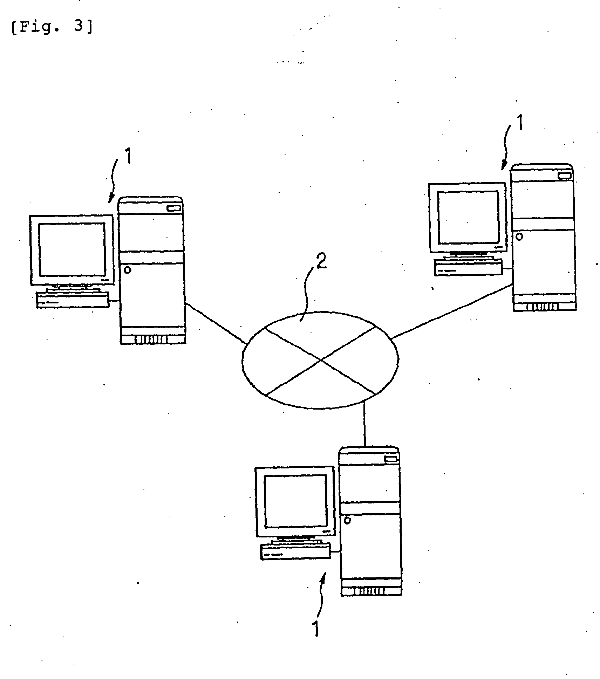

As shown in Fig. 3, the plurality of information processors 1 shown in the figure are connected together by network 2 so as to allow intercommunication and thus constitute an information communication system. Although Fig. 3 shows a configuration in which three information processors 1 are connected to network 2, the number of information processors 1 connected to network 2 is not limited to three and may be any number.

The memory management process of the information processors shown in Fig. 2 will next be explained taking an example in which a message that is received by HTTP or SIP protocol is stored in the shared memory.

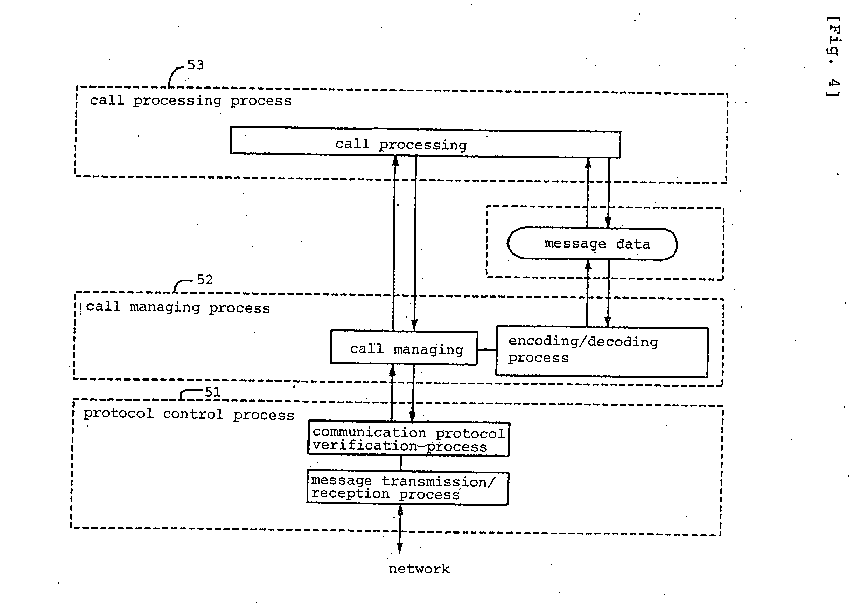

The communication process for transmitting and receiving messages in an information processor is first explained using Fig. 4. Fig. 4 shows the constitution of the communication process that is executed by the information processor shown in Fig. 2.

As shown in Fig. 4, each of protocol control process 51, call managing process 52, and call processing process 53 are executed in the communication process.

Protocol control process 51 includes a message transmission/reception process for transmitting and receiving a message by way of network 2, and a communication protocol verification process for verifying the protocol of a received message.

Call managing process 52 includes an encoding/decoding process for decoding a received message to the internal data that is used in each process and storing the decoded message in shared memory area 122, and for encoding data stored in shared memory area 122 to create information for transfer to call processing process 53, and a call managing process for monitoring messages stored in shared memory area 122 and call processing process 52.

Call processing process 53 includes predetermined call processes for acquiring information from call managing process 52 such as the positional information of messages stored in shared memory area 122 and referring to this information to read message data stored in shared memory area 122.

The exchange of information between protocol control process 51 and call managing process 52 or between call managing process 52 and call processing process 53 is carried out using a message queue for interprocess communication that is provided as, for example, a process of the OS (Operating System).

As described in the foregoing explanation, a plurality of parameters is included in a message that is received by a protocol such as HTTP or SIP. In the present embodiment, an area of a preset size is reserved in shared memory area 122 as a message data area for storing a message. In the present embodiment, however, the values of each parameter are stored sequentially in the message data area without gaps, as will be explained hereinbelow, and the reserved area is therefore smaller than in the prior art.

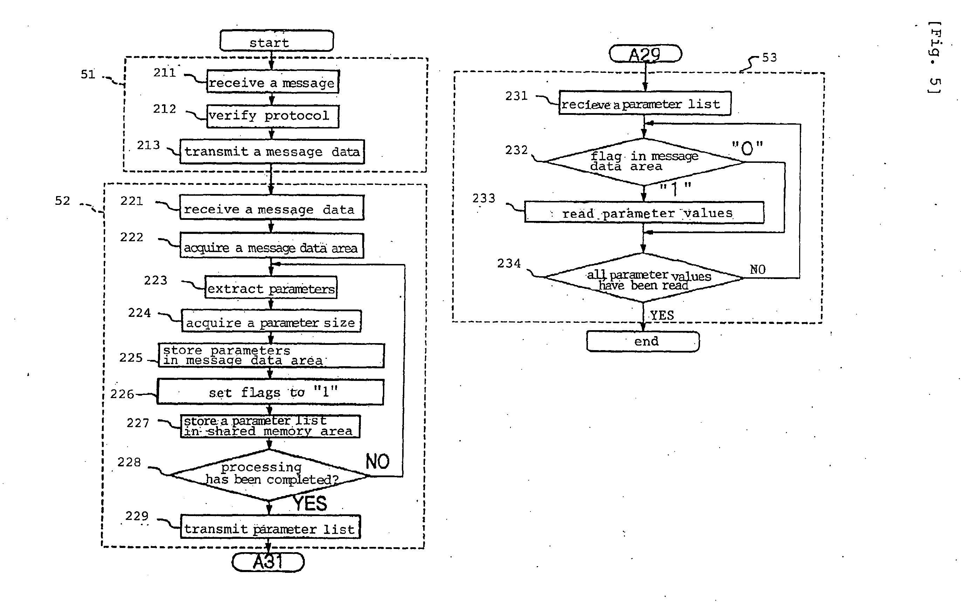

The memory management method of the present embodiment will next be explained with reference to Fig. 5.

Upon receiving a message from any information processor 1 by way of network 2 in Step 211, processor 10 first extracts management information from the header of the received message as protocol control process 51. The structure (such as HTTP or SIP) of the message is next verified in Step 212, and the data of the received message is then handed over to call managing process 52 in Step 213.

In call management process 52, upon the acquisition of message data from protocol control process 51 in Step 221, message data area 123 of a predetermined size is first reserved in shared memory area 122 for storing the acquired data in memory 12 in Step 222.

Parameters are next sequentially extracted from the message data in Step 223, and the sizes of the extracted parameters are each acquired in Step 224.

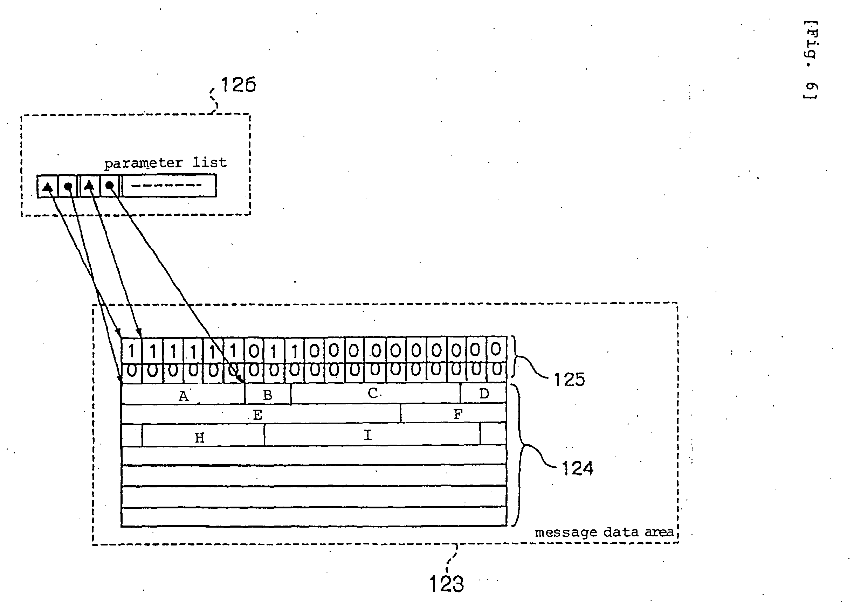

Next, as shown in Fig. 6, actual value area 124, which is an area for storing parameters, is provided in message data area 123 in Step 225, and the values of parameters are sequentially stored in this actual value area 124 without creating unused areas. In Step 226, flag area 125 is provided for storing flags that correspond to these parameters, these flags being set to "1."

In messages that are transmitted or received by a protocol such as SIP, predetermined values may not set in some parameters depending on the type of service that is offered to users. The flags are used for determining whether values of parameters exist or not, and the corresponding flag in flag area 125 is set to "0" when values of a parameter do not exist. Parameters that correspond to flags that have been set to "0" are not accessed in each of the processes of processor 10.

When parameter values have been stored in message data area 123 in the processing of Steps 225 and 226, parameter list 126 that includes positional information (ID) that indicates the locations at which parameter values have been stored and the locations at which the corresponding flags have been stored is registered in shared memory area 122 in Step 227.

In Step 228, it is determined whether the processing from Step 223 to Step 227 has been completed for all parameters. If there are parameters for which processing has not been completed, the processing from Step 223 to Step 227 is repeated.

When processing has been completed for all parameters, the parameter list 126 that was created in Step 227 is passed to call processing process 53 in Step 229.

In call processing process 53, upon receiving parameter list 126 from call managing process 52, shared memory area 122 is accessed by referring to parameter list 126 in Step 231. At this time, each of the flags in flag area 125 is sequentially consulted in Step 232 to check whether parameter values exist or not, and in Step 233, parameter values are read from actual value area 124 only when the corresponding flag is "1."

It is next determined in Step 234 whether or not the processes of Step 232 and Step 233 have been completed for all parameters or parameters that are necessary in call processing process 53. The processes of Steps 232 and 233 are repeated if there remain parameters that are necessary and that have not been read.

As explained in the foregoing description, the memory management method of the present embodiment sequentially stores the values of each parameter without gaps in actual value area 124 of message data area 123 and holds, as a parameter list, positional information that indicates the locations of storage of each parameter to allow a message (data) consisting of a plurality of parameters of any size to be reliably stored in memory 12. In particular, each parameter is stored in actual value area 124 of message data area 123 without creating unused areas, thereby enabling efficient storage in memory 12 without increasing unnecessary empty areas.

In addition, the existence of values of each parameter is. indicated by a corresponding flag in flag area 125, and by simply checking flags, processor 10 need not access parameters for which values do not exist. Unnecessary access of memory 12 is therefore reduced, and drops in the processing speed of processor 10 can be prevented.

### Second Embodiment

As described in the foregoing explanation, a single message data storage area 123 is provided in shared memory area 122 in the first embodiment, and each parameter of a received message is stored. The present embodiment differs from the first embodiment in that a plurality of message data areas are provided in shared memory area 122. The constitution of the information processor is identical to that of the first embodiment, and explanation of the information processor is therefore omitted.

The present embodiment enables the reservation of a new message data area and storage of parameters when it is not possible to store all parameters in the message data area that was reserved first.

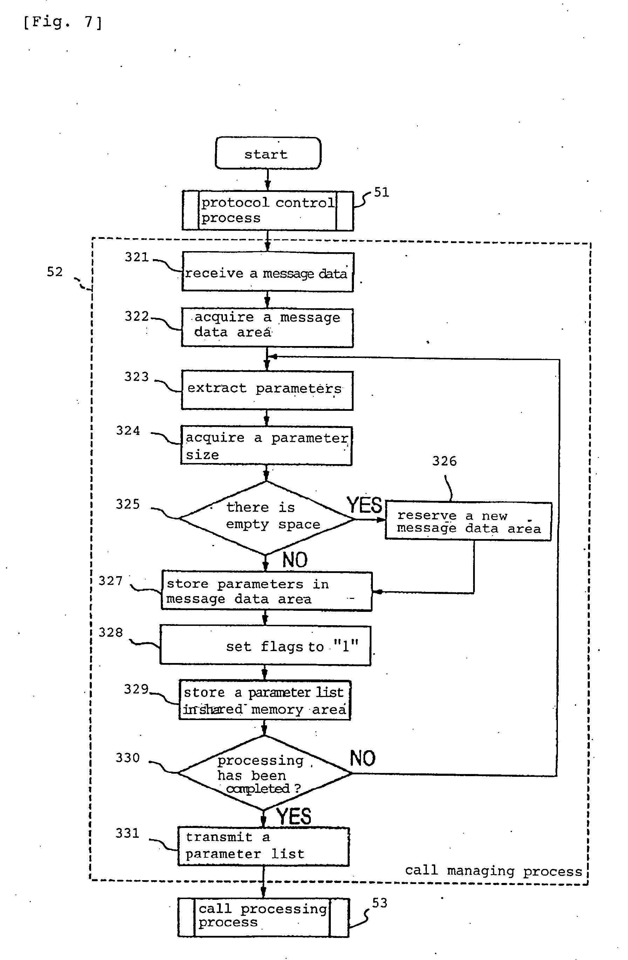

As shown in Fig. 7, upon completion of the message transmission/reception processes and communication protocol verification process by protocol control process 51, which is identical to the first embodiment, processor 10 acquires the message data from protocol control process 51 by call managing process 52' in Step 321. In Step 322, processor 10 next reserves first message data area 123a of a predetermined size in shared memory area 122 to store the acquired data in memory 12.

Parameters are then sequentially extracted from the received message in Step 323, and the sizes of the extracted parameters are acquired in Step 324. It is then determined in Step 325 whether there is empty space in which the parameters can be stored in first message data area 123a. The process proceeds to Step 327 if empty area exists, but if there is not sufficient empty area in first message data area 123a, second message data area 123b is newly reserved in Step 326 and the process proceeds to Step 327.

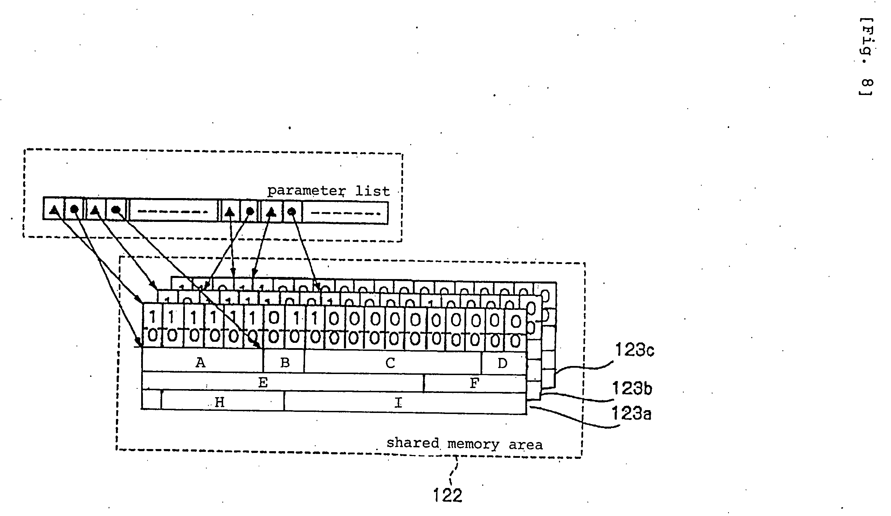

In Step 327, an actual value area is provided in first message data area 123a to store parameters, as in the first embodiment, and the values of parameters are sequentially stored in this actual value area without creating unused areas (refer to Fig. 8). Similarly, when parameters are stored in second message data area 123b, an actual value area is provided in second message data area 123b and the values of parameters are sequentially stored in this actual value area without creating unused areas in Step 327. A flag area is provided for storing flags corresponding to these parameters in Step 328 (Refer to Fig. 8), and these flags are set to "1." When a parameter lacks values, however, the flag of the corresponding flag area is set to "0."

Fig. 8 shows an example in which first message data area 123a, second message data area 123b, and third message data area 123c are reserved in shared memory area 122. Third message data area 123c is an area that is newly reserved when the empty areas of first message data area 123a and second message data area 123b are both insufficient. Similarly, if the empty area of a currently reserved message data area is insufficient, a new message data area may be reserved as necessary.

If parameters are stored in first message data area 123a (or second message data area 123b) in the processing of Steps 327 and 328, parameter list 126 consisting of positional information (ID) that indicates the location at which parameters are stored and the location at which the corresponding flags are stored is registered in shared memory 122 in Step 329.

Finally, it is determined in Step 330 whether or not the processing from Step 323 to Step 329 has been completed for all parameters. The processing from Step 323 to Step 329 is repeated when parameters remain for which processing has not been completed.

When processing for all parameters has been completed, the parameter list 126 that was generated in Step 329 is passed on to call processing process 53 in Step 331.

The procedures of call processing process 53 are identical to those of the first embodiment.

As described in the foregoing explanation, according to the memory management method of the present embodiment, a plurality of message data areas are provided in the shared memory area as necessary to enable the reliable storage of parameters in the shared memory area regardless of the size of parameters that have been received. Problems in the call processing process of information processor 1 can thus be prevented with greater reliability.

In the first embodiment and the second embodiment described in the foregoing explanation, an example was taken in which messages that were received by a protocol such as HTTP or SIP were stored in a shared memory area. However, the data that are stored are not limited to messages composed of a plurality of parameters and may take any form that is constituted by a plurality of data items of any size. In addition, the storage areas are not limited to shared memory areas and may be any areas of a memory.

While preferred embodiments of the present invention have been described using specific terms, such description is for illustrative purposes only, and it is to be understood that changes and variations may be made without departing from the spirit or scope of the following claims.

## Claims

1. A memory management method for storing in memory a message that is constituted by a plurality of parameters of any size; said memory management method comprising steps of:
reserving a message data area of a predetermined size in said memory for storing said message;
providing an actual value area, which is an area for storing values of the parameters, in said message data area, and sequentially storing values of said parameters in the actual value area without creating unused areas;
creating a parameter list in which positional information is registered that indicates the locations at which values of the parameters are stored; and
referring to said parameter list to access said message data area and read out each value of said parameters that are necessary for each of predetermined processes.

2. A method according to claim 1, wherein said method further comprises steps of:
providing a new message data area in said memory when there is no empty area for storing said parameters in said message data area; and
sequentially storing the parameters in the new message data area.

3. A method according to claim 1, wherein said method further comprises steps of:
providing a flag area in said message data area for storing flags that indicate the existence of values of said parameters;
storing values of said flags corresponding to said parameters in said flag area; and
registering, in said parameter list, positional information that indicates the location at which said flags are stored.

4. A method according to claim 2, wherein said method further comprises steps of:
providing a flag area in said message data area for storing flags that indicate the existence of values of said parameters;
storing values of said flags corresponding to said parameters in said flag area; and
registering, in said parameter list, positional information that indicates the location at which said flags are stored.

5. An information processor, comprising:
memory including a message data area of a predetermined size in which a message is stored that is constituted by a plurality of parameters of any size, and an actual value area, which is an area for storing values of the parameters in said message data area; and
a processing means for sequentially storing values of said parameters in the actual value area without creating unused areas, creating a parameter list in which positional information is registered that indicates the locations at which values of the parameters have been stored, referring to said parameter list and accessing said message data area, and reading out each of the values of said parameters that are necessary for each of predetermined processes.

6. An information processor according to claim 5, wherein said processing means provides a new message data area in said memory when there is no empty area in said message data area for storing said parameters, and sequentially stores the parameters in the new message data area.

7. An information processor according to claim 5, wherein:
said message data area of said memory includes a flag area for storing flags that indicate the existence of values of said parameters; and
said processing means stores, in the flag area, values of said flags that correspond to said parameters, and registers, in said parameter list, positional information that indicates the locations at which said flags are stored.

8. An information processor according to claim 6, wherein:
said message data area of said memory includes a flag area for storing flags that indicate the existence of values of said parameters; and
said processing means stores, in the flag area, values of said flags that correspond to said parameters, and registers, in said parameter list, positional information that indicates the locations at which said flags are stored.

9. An information communication system comprising a plurality of information processors according to claim 5 that are connected together to allow communication by way of a network.
